(19) Europäisches Patentamt
European Patent Office
Office européen des brevets

(11) EP 0 835 276 B1

(12) EUROPEAN PATENT SPECIFICATION

(45) Date of publication and mention of the grant of the patent:
**28.07.1999 Bulletin 1999/30**

(21) Application number: **96911108.7**

(22) Date of filing: **18.04.1996**

(51) Int Cl.[6]: **C08G 69/48**, C08G 69/44, C08K 5/353, C08K 5/357

(86) International application number:
**PCT/NL96/00172**

(87) International publication number:
**WO 96/34909 (07.11.1996 Gazette 1996/49)**

# (54) HIGH-MOLECULAR POLYAMIDE

POLYAMID MIT HOHEM MOLEKULARGEWICHT

POLYAMIDE A POIDS MOLECULAIRE ELEVE

(84) Designated Contracting States:
**BE DE FR GB IT NL**

(30) Priority: **04.05.1995 BE 9500406**

(43) Date of publication of application:
**15.04.1998 Bulletin 1998/16**

(73) Proprietor: **DSM N.V.**
**6411 TE Heerlen (NL)**

(72) Inventors:
- **LOONTJENS, Jacobus, Antonius**
  **NL-6231 KK Meerssen (NL)**
- **DERKS, Franciscus, Johannes, Marie**
  **NL-6093 DK Heythuysen (NL)**
- **SHAM, Chi, Keung**
  **NL-6174 RS Schinnen (NL)**

(56) References cited:
**DE-B- 2 458 733**

- **DATABASE WPI Section Ch, Week 8604 Derwent Publications Ltd., London, GB; Class A, AN 86-025650 XP002008682 & JP,A,60 248 730 (UNITIKA KK) , 9 December 1985**
- **DATABASE WPI Section Ch, Week 8604 Derwent Publications Ltd., London, GB; Class A23, AN 86-025651 XP002008683 & JP,A,60 248 731 (UNITIKA KK) , 9 December 1985**
- **PATENT ABSTRACTS OF JAPAN vol. 008, no. 168 (C-236), 3 August 1984 & JP,A,59 068330 (TAKEDA YAKUHIN KOGYO KK), 18 April 1984, & EP,A,0 097 937 (TAKEDA) 11 January 1984**
- **PATENT ABSTRACTS OF JAPAN vol. 013, no. 569 (C-666), 15 December 1989 & JP,A,01 236238 (TEIJIN LTD), 21 September 1989, cited in the application**
- **PATENT ABSTRACTS OF JAPAN vol. 013, no. 494 (C-651), 8 November 1989 & JP,A,01 197526 (TEIJIN LTD), 9 August 1989, cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 835 276 B1

## Description

The invention relates to a process for the preparation of a high-molecular polyamide by mixing polyamide of a lower molecular weight with a bislactam in the melt.

Such a process is known from various patent publications, in general involving the addition of 0.2-10 wt.% of the bislactam to the polyamide. It is remarkable that the increase in the molecular weight strongly differs in the various publications and may vary between an increase in the inherent viscosity of nylon 6 from 1.62 to 4.00 (JP-A-01197526) and from 1.24 to 1.55 (JP-A-01236238) upon addition of 0.8-1.0 wt.% of N,N'-terephtaloyl-bis-ε-caprolactam to the melt.

The increase in the molecular weight in these cases appears to be highly dependent on the balance between the proportions of acid and amino end groups in the polyamides started from.

Since this balance is highly dependent on, among other factors, the conditions of preparation of the polyamide, e.g. the use of chain terminators or in balance of the initial monomers, the processor who wishes to obtain an enhanced molecular weight by using a bislactam as chain extender will either have great problems with the reproducibility of the final molecular weight or be obliged to have extensive analyses performed on each batch of initial polyamide and adjust his recipes to the results. This is undesirable where high productivity at low costs is sought.

Another drawback of these known compositions is that the melt viscosity varies strongly with the residence time in the melt.

The object of the invention therefore is a process which does not have said drawbacks and provides, in a simple reproducible manner, with a minimum of recipe adaptations, a significant increase in the molecular weight of a polyamide which is maintained in the melt for a fairly long time.

This object of the invention is achieved if besides the bislactam a bisoxazoline and/or a bisoxazine is/are also used as chain extender.

The process for the preparation of a high-molecular polyamide by adding a bislactam to the melt of a polyamide of a lower molecular weight is characterized in that moreover a bisoxazoline and/or a bisoxazine is/are added.

It is known from DE-B-2458733 that addition of a bisoxazoline and/or a bisoxazine results in an increase in the molecular weight of the polyamide. However, in general the effect is small and time dependent.

Highly surprisingly, the process according to the invention results in a more than additive effect where the increase in melt viscosity is concerned, as well as in a very stable and reproducible melt viscosity.

The invention also covers a polyamide composition comprising:

a. one or more polyamides
b. a bislactam
c. a bisoxazoline and/or a bisoxazine.

The process according to the invention is in general suitable for all polyamides which are melt processable. The process is highly suitable for (semi)crystalline polyamides, for instance the aliphatic polyamides, such as nylon 4, nylon 4,6, nylon 6, nylon 7, nylon 6,6, nylon 8, nylon 9, nylon 8,10 etc. The best results are achieved with polyamides obtained by ring-opening polymerization of lactams, for instance poly(ε-caprolactam), also called nylon 6, and poly (laurolactam), nylon 12, or by polycondensation of α,ω-amino acids.

Special benefits can be obtained in the case of polyamide homopolymers and copolymers that contain units derived from an aromatic dicarboxylic acid and an aliphatic diamine, which have a relatively low polymerization rate. Examples of these (co)polyamides are 6.T, nylon 6.I/6.T, nylon 6/6.T, nylon 6.I/6.T/2MP.T or nylon 6/6.6/6.T in which T = terephthalic acid, I = isophthalic acid and 2 MP.T = 2-methylpentamethyleneterephthalic diamide.

The composition according to the invention also includes copolyamides.

Bislactams which amongst others are suitable for the process according to the invention have the following general formula:

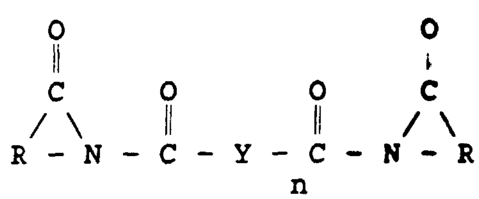

(1)

where Y = a bivalent alkylene group or an aromatic group, R = an alkylene group and n = 0 or 1.

Examples of compounds having the above formula are N,N'-isophthaloyl bis-2-caprolactam, N,N'-adipoyl bis-ε-caprolactam, N,N'-terephtaloyl bislaurolactam and N,N'-isophtaloyl bisbutyrolactam.

These compounds can be synthesized simply by reacting the corresponding carboxylic acid dihalide with lactam in the presence of an amine or an inorganic base, for instance KOH.

The bisoxazoline and bisoxazine have the general formula:

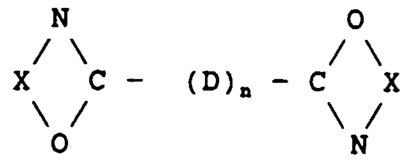

(2)

where X = a bivalent group and the ring is a 5-ring or 6-ring for bisoxazoline and bisoxazine, respectively. X is for instance an ethylene group, a substituted ethylene group, a trimethylene or a substituted trimethylene group. As substituent, for instance an alkyl group with 1 to 10 carbon atoms, an aryl group, a cycloalkyl group or an aralkyl group may be present. Examples of an alkyl group are methyl, ethyl, hexyl, aklylhexyl, nonyl, etc., of an aryl group are phenyl, naphthyl, diphenyl, etc. and an example of a cycloalkyl group is cyclohexyl.
D is a bivalent organic group, for instance an alkylene group, an arylene group, a cycloalkylene group and an aralkylene group.
n = 0 or 1.

Examples of bisoxazolines and bisoxazines are 2,2'-bis(2-oxazoline), 2,2-bis(4-methyl-2-oxazoline), 2,2'-bis (4-phenyl-2-oxazoline), 2,2'-bis(4-hexyl-oxazoline), 2,2'-p or m-phenylene bis(2-oxazoline), 2,2'-tetramethylene bis (4,4'-dimethyl-2-oxazoline) and the corresponding oxazines.

Preference is given to 2,2'-bis(2-oxazoline), 2,2'-p- phenylene bis(2-oxazoline), 2,2'-m-phenylene bis(2-oxazoline) and the corresponding oxazines.

These oxazolines and oxazines can be prepared simply by means of ring closure of the corresponding bisamide alcohol with a dehydration agent, for instance concentrated sulphuric acid or thionyl chloride or by means of ring closure of the corresponding bisamide halide with a base. Another simple process of preparation is that in which a dinitrile and ethanol or propanol amine are heated to approx. 180°C in the presence of a Lewis acid. The preparation processes are not limited to said methods, however.

The quantity of bislactam that is used in the process according to the invention in general amounts to at least 0.1 part by weight per 100 parts by weight of polyamide. Depending on the polyamide chosen, the desired increase in molecular weight or melt viscosity, and the bislactam, the required amount may vary between wide limits, for instance between 0.1 and 5 parts by weight per 100 parts by weight of polyamide, preferably between 0.3 and 3 parts by weight per 100 parts by weight of polyamide. In special cases, for instance if the polyamide started from has a very low molecular weight, for instance Mn = 5000 or less, a larger amount of bislactam may be required.

The quantity of bisoxazoline or bisoxazine used in the process according to the invention in general amounts to at least 0.1 part by weight per 100 parts by weight of polyamide. Depending on the polyamide chosen, the desired increase in molecular weight or melt viscosity, and the bisoxazoline or bisoxazine, respectively, the required amount may vary between wide limits, for instance between 0.1 and 4 parts by weight per 100 parts by weight of polyamide, preferably between 0.2 and 2.5 parts by weight per 100 parts by weight of polyamide.

If a quantity larger than 5 or 4 parts by weight, respectively, is added, the viscosity will increase to such an extent in certain cases that normal processing is not possible any more, or, by contrast, the viscosity increasing effect is reduced.

The person skilled in the art will be able to determine the optimum quantities in a given situation by means of simple systematic experiments.

The composition may further also contain the usual additives for instance stabilizers, colorants, processing agents, such as release agents and antistatic agents, and nucleants, for instance talcum, and filling or reinforcing materials, for instance mineral fillers, such as mica, organic fibres, such as aramid fibres, and mineral fibres, such as glass fibres, and flame retardants.

The process can be carried out in a simple manner, for instance by mixing the polyamide, the bislactam and the bisoxazoline or bisoxazine in solid form, after which the mixture is molten in for instance a Haake kneader, a Brabender mixer or an extrusion apparatus. The various components may also be supplied directly to the melting apparatus or the bislactam and bisoxazoline and/or bisoxazine may be first pre-mixed in solid form and then added to the polyamide melt.

A preferred embodiment of the invention is one in which in the polymerization process for producing the polyamide at the end of polymerization column the bislactam and the bisoxazoline or bisoxazine, is introduced and mixed into the polymerizing melt shortly before leaving the column. In another preferred embodiment the extruder to

be used for melt mixing the bislactam and the bisoxazoline or bioxazine is placed directly at the exit of the polymerization column and the molten polyamide leaving the polymerization column is mixed before being solidified.

The invention will now be elucidated by means of the following non-restrictive examples.

Materials used:

a.1. polyamide 4.6, STANYL®: $\eta_{rel}$ = 2.8 (1 gram in 100 ml of formic acid) from DSM, the Netherlands
a.2. polyamide 6, AKULON® F-124 $\eta_{rel}$ = 2.5 from DSM, the Netherlands
b. N,N'-terephtaloyl bislaurolactam
c.1. 2,2'-m-phenylene bis(2-oxazoline), Takeda Chemicals Japan (BPO)
c.2. 2,2'-m-phenylene bis(2-oxazine)

Procedure:

The polyamides were molten with the bisoxazoline or bisoxazine and/or the bislactam in a Haake Rheocoral 90 kneader, chamber volume 50 ml and 80 rpm. For polyamide 6 the temperature was set to 240°C and for polyamide 4,6 to 300°C. The torque of the kneader was measured at several points in time.
The tested compositions and the results of the measurements are listed in table 1.

TABLE 1

| Experiment | 1 | 2 | 3 | 4 Example I | 5 | 6 | 7 | 8 Example II | 9 Example III | 10 Example IV |
|---|---|---|---|---|---|---|---|---|---|---|
| Composition | parts by wt. | | | | | | | | | |
| a.1. | 100 | 100 | 100 | 100 | | | | | | |
| a.2. | | | | | 100 | 100 | 100 | 100 | 100 | 100 |
| b. | | 2 | | 2 | | | 1.5 | 1.5 | 1.5 | 1.5 |
| c.1. | | | | | | 0.5 | | 0.5 | 1.0 | |
| c.2. | | | 1.5 | 1.5 | | | | | | 1.5 |
| | | | | | | | | | | |
| kneader torque (Nm) | | | | | | | | | | |
| 4 min. | 2.5 | 1.3 | 4.3 | 6.5 | 2.5 | 3.0 | 6.6 | 10.2 | 12.0 | |
| 6 min. | | | | | 2.0 | 3.2 | 5.9 | 10.2 | 12.5 | 14.8 |
| 10 min. | | | | | 2.4 | 4.1 | 5.2 | 10.2 | 12.4 | 14.8 |
| 20 min. | | | | | 3.0 | 5.5 | 4.5 | 8.8 | 11.5 | |

Experiments 1-4 show the effect of the addition to polyamide 4,6 of the bislactam and bisoxazine, if added

separately and if both are present, exp. 4, example 1. A significantly higher torque than to be expected on the basis of (comparative) experiments 2 and 3 was found in example I.

Example II (exp. 8) as well shows the more than additive effect of the combination of oxazoline and bislactam on the melt viscosity of polyamide 6. It is very remarkable that the melt viscosity remains stable at the high level for a long time.

Due to the high melt viscosity and its stability, the compositions according to the invention are particularly suitable for extrusion and blow molding applications for the manufacture of for instance film and stock shapes.

In a further experiment compositions based on nylon-6 have been processed over a single screw extruder and the effect of presence of caprolactam and cyclic and linear oligomers in the polyamide has been studied.
Extrusion conditions have been: Temperature profile from hopper to die: 200, 235, 250--250°C. Screw speed: 200 rpm. Without vacuum venting.
The chain extender was tumbled on the polyamide without any adhering oil. The tumbled granules were dosed into the hopper with a gravimetric device.
Results are given in Table 2.

TABLE 2

| Sample characteristic | | | | | CYCLIC OLIGOMER | | | | | LINEAR OLIGOMER | | | | |
|---|---|---|---|---|---|---|---|---|---|---|---|---|---|---|
| | $[NH_2]$ mmol/kg | [COOH] mmol/kg | RSV | CL m/m% | 2-mer m/m% | 3-mer m/m% | 4-mer m/m% | 5-mer m/m% | 6-mer m/m% | 2-mer ppm | 3-mer ppm | 4-mer ppm | 5-mer ppm | 6-mer ppm |
| Nylon-6 (as recovered) lin washed | 57 | 51 | 2.25 | 8.10 | 0.38 | 0.48 | 0.44 | 0.39 | 0.35 | 80 | 116 | 161 | 215 | 271 |
| extruder | 55 | 50 | 2.27 | 7.76 | 0.31 | 0.49 | 0.43 | 0.38 | 0.34 | 71 | 106 | 156 | 196 | 248 |
| after washing | 55 | 52 | 2.41 | 0.02 | 0.03 | 0.09 | 0.15 | 0.22 | 0.31 | <4 | 22 | 76 | 153 | 213 |
| 0.3% BPO/0.5% IBC extruded | 40 | 39 | 2.69 | 8.00 | 0.33 | 0.47 | 0.43 | 0.38 | 0.32 | 33 | 41 | 62 | 75 | 92 |
| (after washing) | 33 | 42 | 2.88 | 0.03 | 0.01 | 0.06 | 0.13 | 0.20 | 0.27 | <4 | 9 | 37 | 52 | 76 |

BPO is 2.2'-m-phenylene bis(2-oxazoline)

IBS isophthalic biscaprolactam

Compared to the blank experiment, in which the unwashed nylon-6 was extruded without any chain extender, a significant increase of the relative viscosity, measured in formic acid (RSV), is realized in the presence of the chain extender combination of the invention. After washing the oligomer content is lower.

In a further experiment the influence of mixing intensity on the effectiveness of the chain extension was studied. For this purpose the effect of a double screw, (DS), vs. a single scres, (SS), extruder under the conditions given previously was studied. The results are given in Table 3.

TABLE 3

| | | | | | CYCLIC OLIGOMER | | | | | LINEAR OLIGOMER | | | | |
|---|---|---|---|---|---|---|---|---|---|---|---|---|---|---|
| Sample characteristic | $[NH_2]$ mmol/kg | [COOH] mmol/kg | RSV | CL m/m% | 2-mer m/m% | 3-mer m/m% | 4-mer m/m% | 5-mer m/m% | 6-mer m/m% | 2-mer ppm | 3-mer ppm | 4-mer ppm | 5-mer ppm | 6-mer ppm |
| F124 (as received) | 55 | 52 | 2.45 | 0.08 | 0.02 | 0.08 | 0.15 | 0.23 | 0.33 | 17 | 25 | 63 | 137 | 221 |
| F124 (SS Blank) | 56 | 49 | 2.51 | 0.19 | 0.02 | 0.08 | 0.15 | 0.23 | 0.32 | 54 | 62 | 93 | 149 | 218 |
| F124/0.3% BPO/ 0.5% IBC (SS) | 41 | 39 | 3.02 | 0.37 | 0.02 | 0.08 | 0.15 | 0.23 | 0.31 | 29 | 30 | 45 | 65 | 98 |
| F124/0.6% BPO/ 1% IBC (SS) | 29 | 34 | 3.77 | 0.56 | 0.02 | 0.08 | 0.15 | 0.23 | 0.31 | 8 | 6 | 9 | 14 | 21 |
| F124/1% BPO/1.5% IBC (SS) | 43 | 21 | 3.67 | 0.68 | 0.02 | 0.07 | 0.15 | 0.23 | 0.30 | <4 | <5 | <6 | <8 | <9 |
| F124 (DS Blank) | 56 | 47 | 2.53 | 0.11 | 0.02 | 0.008 | 0.15 | 0.23 | 0.32 | 66 | 71 | 113 | 156 | 213 |
| F124/0.3% bpo/0.5% ibc (DS) | 41 | 38 | 2.92 | 0.27 | 0.02 | 0.08 | 0.15 | 0.23 | 0.31 | 36 | 42 | 57 | 77 | 109 |
| F124/0.6% BPO/1% IBC (DS) | 29 | 37 | 3.61 | 0.13 | 0.02 | 0.08 | 0.15 | 0.23 | 0.30 | 10 | 13 | 20 | 24 | 35 |
| F124/1% BPO/1.5% IBC (DS) | 29 | 35 | 3.69 | 0.15 | 0.02 | 0.09 | 0.15 | 0.23 | 0.30 | <4 | <5 | <6 | <8 | <10 |

F124 is the nylon-6 of the previous example after washing twice with water.

Except the caprolactam content, (CL)*, the results are practically identical, indicating that the process of chain extension

is very fast and not limited by transport.

This makes the process applicable in existing polymerisation columns that are provided at the end of the column with a simple mixing device, for instance for mixing colorants or other additives into the polymer melt, without disturbing the prop stream regime of the polymerisation column.

A well-known method for producing high molecular weight nylons is by aftercondensing in the solid phase the polyamide obtained from the polymerization process in the melt phase. This process is very time consuming and some by-products, sometimes resulting in discoloration of the polyamide are formed. Very surprising the nylon-6 obtained by the process of the present invention contains significantly less caprolactam than the high molecular weight nylon-6 after aftercondensing in the solid phase which makes the high molecular nylon-6 produced according to the invention more fit for application in food packaging.

## Claims

**1.** Process for the preparation of a high-molecular polyamide by adding a bislactam to the melt of a polyamide of a lower molecular weight, characterized in that moreover a bisoxazoline and/or a bisoxazine is/are added.

**2.** Process according to claim 1, characterized in that the bislactam has been derived from an aromatic dicarboxylic acid and E-caprolactam or laurolactam.

**3.** Process according to claim 1 or 2, characterized in that the bisoxazoline and/or the bisoxazine is/are chosen from the group consisting of 2,2'-bis(2-oxazoline), 2,2'-p-phenyl bis(2-oxazoline), 2,2'-m-phenylene bis(2-oxazoline) and the corresponding oxazines.

**4.** Process according to claim 1, characterized in that the quantity of bislactam added is between 0.1 and 5 parts by weight and the quantity of bisoxazoline and/or bisoxazine between 0.1 and 4 parts by weight per 100 parts by weight of polyamide.

**5.** Process for the preparation of a high molecular weight polyamide by polymerising the monomers for the repeating units in the polyamide in the melt under conventional conditions, characterized in by adding at the end of the polymerization process a bislactam and a bixoxazoline or a bisoxazine to the melt.

**6.** Polyamide composition comprising:

a. 100 parts by weight of polyamide
b. 0.1-5 parts by weight of a bislactam
c. 0.2-4 parts by weight of a bisoxazoline and/or bisoxazine.

## Patentansprüche

**1.** Verfahren zur Herstellung eines Polyamids mit hohem Molekulargewicht durch Zugabe eines Bislactams zu der Schmelze eines Polyamids mit niederem Molekulargewicht, dadurch gekennzeichnet, daß darüber hinaus ein Bisoxazolin und/oder ein Bisoxazin zugegeben wird/werden.

**2.** Verfahren nach Anspruch 1, dadurch gekennzeichnet, daß das Bislactam von einer aromatischen Dicarbonsäure und ε-Caprolactam oder Laurolactam abgeleitet ist.

**3.** Verfahren nach Anspruch 1 oder 2, dadurch gekennzeichnet, daß das Bisoxazolin und/oder das Bisoxazin ausgewählt ist/sind aus der Gruppe, bestehend aus 2,2'-Bis(2-oxazolin), 2,2'-p-Phenylbis(2-oxazolin), 2,2'-m-Phenylenbis(2-oxazolin) und den entsprechenden Oxazinen.

**4.** Verfahren nach Anspruch 1, dadurch gekennzeichnet, daß die Menge an zugegebenem Bislactam zwischen 0,1 und 5 Gewichtsteilen und die Menge an Bisoxazolin und/oder Bisoxazin zwischen 0,1 und 4 Gewichtsteilen pro 100 Gewichtsteile Polyamid liegt.

**5.** Herstellungsverfahren für ein Polyamid mit hohem Molekulargewicht durch Polymerisieren der Monomeren für die

* This difference is caused by the fact that the double screw extruder is operated with venting.

wiederkehrenden Einheiten in dem Polyamid in der Schmelze unter üblichen Bedingungen, gekennzeichnet durch Zugabe eines Bislactams und eines Bisoxazolins oder eines Bisoxazins am Ende des Polymerisationsverfahrens zu der Schmelze.

**6.** Polyamidmasse, umfassend:

a. 100 Gewichtsteile Polyamid,
b. 0,1-5 Gewichtsteile eines Bislactams,
c. 0,2-4 Gewichtsteile eines Bisoxazolins und/oder Bisoxazins.

**Revendications**

**1.** Procédé de préparation d'un polyamide à poids moléculaire élevé par l'adjonction d'un bilactame à la masse fondue d'un polyamide de poids moléculaire plus faible, caractérisé en ce que on ajoute en plus de la bisoxazoline et/ou de la bisoxazine.

**2.** Procédé selon la revendication 1, caractérisé en ce que le bilactame est dérivé d'un acide dicarboxylique aromatique et du ε-caprolactame ou du laurolactame.

**3.** Procédé selon la revendication 1 ou 2, caractérisé en ce que la bisoxazoline et/ou la bisoxazine est/sont choisie (s) à partir du groupe composé de la 2,2'-bis(2-oxazoline), de la 2,2'-p -phényl bis(2-oxazoline), de la 2,2'-m-phénylène bis (2-oxazoline) et des oxazines correspondantes.

**4.** Procédé selon la revendication 1, caractérisé en ce que la quantité de bilactame ajoutée est comprise entre 0,1 et 5 parties en masse et que la quantité de bisoxazoline et/ou de bisoxazine est comprise entre 0,1 et 4 parties en masse pour 100 parties en masse de polyamide.

**5.** Procédé de préparation d'un polyamide à poids moléculaire élevé consistant à polymériser les monomères pour les unités répétées dans le polyamide à l'état fondu, caractérisé en ce qu'on ajoute un bilactame et une bisoxazoline ou une bisoxazine à la masse fondue à la fin du processus de polymérisation.

**6.** Composition de polyamide comprenant :

a. 100 parties en masse de polyamide ;
b. 0,1 - 5 parties en masse d'un bilactame ;
c. 0,2 - 4 parties en masse d'une bisoxazoline et/ou d'une bisoxazine.